# EUROPEAN PATENT SPECIFICATION

(11) **EP 3 998 532 B1**
(45) Date of publication and mention of the grant of the patent: **23.07.2025**
(21) Application number: 20840930.0
(22) Date of filing: 08.07.2020
(51) Int. Cl.: G06F 11/30, G06F 11/34, G06F 11/362

(54) **METHOD FOR THE SELECTIVE TRACING OF THE EXECUTION OF INSTRUCTIONS, RELATED PROCESSING DEVICE AND PROCESSOR**
VERFAHREN ZUR SELEKTIVEN VERFOLGUNG DER AUSFÜHRUNG VON BEFEHLEN, ZUGEHÖRIGE VERARBEITUNGSVORRICHTUNG UND PROZESSOR
PROCÉDÉ POUR LE TRAÇAGE SÉLECTIF DE L'EXÉCUTION D'INSTRUCTIONS, DISPOSITIF DE TRAITEMENT ASSOCIÉ ET PROCESSEUR

(30) Priority: 12.07.2019 ES 201930650
(43) Date of publication of application: 18.05.2022
(73) Proprietor: Universidad de Alcalá, 28801 Alcala de Henares (Madrid) (ES); Universidad Politécnica de Madrid, 28040 Madrid (ES)
(72) Inventor: RODRÍGUEZ POLO, Óscar, 28801 Alcalá de Henares (Madrid) (ES); MARTÍNEZ HELLÍN, Agustín, 28801 Alcalá de Henares (Madrid) (ES); PARRA ESPADA, Pablo, 28801 Alcalá de Henares (Madrid) (ES); SÁNCHEZ PRIETO, Sebastián, 28801 Alcalá de Henares (Madrid) (ES); GARCÍA TEJEDOR, Ignacio, 28801 Alcalá de Henares (Madrid) (ES); DA SILVA FARIÑA, Antonio, 28040 Madrid (ES)
(74) Representative: Elzaburu S.L.P.
(86) International application number: PCT/ES2020/070437
(87) International publication number: WO 2021/009398

(56) References cited:
- ES-A1- 2 697 548
- ES-A1- 2 697 548
- US-A- 5 933 626
- US-A- 5 996 092
- US-A1- 2009 287 907
- US-B1- 9 507 598

## Description

### STATE OF THE ART

The invention corresponds, in general, to the field of Information and Communications Technology (ICT), although it has specific application in critical systems of the Aerospace, Automotive and High Reliability sectors.

### BACKGROUND OF THE INVENTION

Different inventions have been identified that propose solutions to facilitate the tracing of instructions.

Patent application US 5996092, "System and method for tracing program execution within a processor before and after a triggering event", enables the starting and interrupting of the tracing of instructions, using a trace processor that works in parallel with the processor that executes the instructions themselves. The trace processor, after detecting the start time of the trace by means of a specific instruction, stores in a shared memory information relating to the entire sequence of execution of instructions until the moment at which it detects the stop instruction of the trace. So, to enable and disable the trace it inserts a specific instruction into the executable code.

Commercial tools such as RapiTime (G. Bernat et al., "Identifying Opportunities for Worst-case Execution Time Reduction in an Avionics System," Ada User Journal, Volume 28, Number 3, 2007, pp. 189-194), use certain techniques in order to characterize critical systems in the field of avionics, automotive, or space systems. To achieve this, they use the instrumentation of the code, entering instructions that trigger the trace at the previously selected points analysing the source files. The instrumentation, however, has its disadvantages in the overload introduced in the execution time due to the instructions inserted, and the consequent increase in the space occupied by the executable code.

With respect to patent application US 2017147472, "Systems and methods for a real time embedded trace", the main difference is that the system traces the jump instructions autonomously.

As described above, the identification of the execution time of previously selected instructions is being used in critical systems and enables the tracing of code blocks to evaluate their execution time in the worst case, taking into account that the transition between some of these blocks, such as that corresponding to an *else* block and the subsequent block, do not imply a jump in the execution; they would therefore not be detected by the solution presented by US2017147472.

As for patent US6513134, "System and method for tracing program execution within a superscalar processor", it presents an improvement with respect to US 5996092, enabling working with superscalar processors that work at high frequencies, above 400MHz. To do this, it uses an encoding of the information that it is desired to trace that enables a reduction in the space required to store it in the trace *buffer* that is provided as an output. As in this patent, blocks of instructions are traced to analyse the execution thereof, but defining a more flexible way to trigger the trace and using a trace encoding that enables a saving in terms of the information stored and the number of *pins* used. This patent, therefore, does not prevent the overload of the use of code instrumentation techniques that affect the entire system, as is the case with the invention claimed, but aims to optimize a tracing mechanism, not based on the instrumentation, but on the detection of events that conform to predefined conditions.

Patent US5933626A describes a microprocessor implements an instruction tracing mechanism that saves the state of the microprocessor without special hardware. Prior to the execution of a traced instruction, a trace microcode routine is implemented that saves the state of the microprocessor to external memory. The state information saved by the trace microcode routine varies depending upon the amount of data needed by the end user. After the state of the processor has been saved, the trace instruction is executed. State information that changed during the execution of the trace instruction is saved to memory prior to a subsequent instruction. This patent proposes a trace method that is not selective as it does not allow to determine which instructions to trace and which not to trace, nor does it allow to execute different trace instructions in parallel with the program instructions.

Finally, there is a patent entitled "A METHOD AND DEVICE FOR THE PARALLEL PROCESSING OF PROGRAM INSTRUCTIONS AND TRACE INSTRUCTIONS", patent ES2 697 548 A1, which differs significantly from the new invention filed. Although the issue they intend to solve is the same, in ES 2 697 548 A1, the instrumentation of the code is facilitated by adding a specific trace instruction to the set of instructions of the processor, and a processor design capable of simultaneously decoding and executing an effective instruction and a trace instruction, preventing the execution time overload, but being intrusive with respect to the location of the code and to the total space it occupies, since it requires the modification thereof for the insertion of the trace instructions.

It is therefore concluded that many of the existing systems for tracing instructions enable specific trace triggering events to be programmed, to collect trace information limited to a certain interval prior to and/or subsequent to such an event. These methods, however, suffer from some rigidity in that the number of blocks that can be traced in each execution is always limited, and these are not well adapted to the code instrumentation techniques that are used in the characterization of worst-case execution time in critical systems, such as that used by the aforementioned RapiTime tool.

The above-mentioned applications all disclose methods for tracing microprocessor instructions.

### DESCRIPTION OF THE INVENTION

The invention is defined in the appended independent claims.

In a first aspect of the invention a method is disclosed for generating the content of ar auxiliary memory which, being aligned with the memory that stores the instructions of a program, is intended to store the information that enables the tracing of a set of instructions selected from said program. This method consists of a three-step procedure: 1) From the pre-processed source files (that is, with all macros expanded) of a program, the source code statements to be traced and the type of trace for each statement are selected. 2) After selection, the object files with debugging information for that program are used to automatically locate the relative memory address where the instruction corresponding to the execution of each statement selected is stored. 3) Finally, using the symbol localisation file, and the information obtained in the two previous steps, the content of the auxiliary memory aligned with the program memory is generated. This content places in the absolute positions, which have been calculated on the basis of the symbol location file and of the relative memory addresses obtained in step 2), the code of the type of trace chosen for each statement in step 1), the memory thus being configured with the information that enables the tracing of the statements selected. The second aspect of the invention is a configurable processing device capable of working in two modes called "TRACE" and "NOMINAL".

In "NOMINAL" mode the device reads and interprets the content of the auxiliary memory as error detection and correction codes associated with the instructions stored in the program memory, correcting the instructions in the event that the fault is recoverable, or generating an exception in the event that it is not.

In "TRACE" mode, the device is able to read and interpret the trace codes stored in the auxiliary memory, execute them in parallel with the instructions aligned to each code, finally resulting in the generation of trace information in an output register, this information also being sufficient to unequivocally identify the instruction traced.

The invention is directly applicable to those architectures that use error detection and correction modules such as EDAC modules, although any architecture can be the object of the invention by enabling access to an auxiliary memory aligned with the program memory, so that with each word in the program memory, the word in the auxiliary memory that has the same displacement is also captured.

The processing device configurable in "TRACE" mode and in "NOMINAL" mode, comprises:
- an instruction seeking step which, based on the address of the next instruction to be executed, simultaneously reads an instruction in the program memory, and a word in the auxiliary memory aligned with the program memory. In "TRACE" mode, this step generates a trace instruction by composing the trace code, and the program memory address, enabling the unequivocal identification of the instruction traced. In "NOMINAL" mode, the step generates a valid program instruction, once the possible memory storage errors have been corrected, or generates an exception, in the event that the errors detected could not be corrected;
- a decoding step comprising:
   o a program instruction decoding module;
   o a trace instruction decoding module (operating only in "TRACE" mode).
- a program instruction *pipeline* for processing only program instructions;
- a trace *pipeline* for processing only trace instructions (operating only in TRACE mode);
- an output register for the trace (operating only in TRACE mode);
- a data path which in turn comprises an array of multiplexers;
- a data path controller, having an interface comprised of an array of inputs, originating from elements of the various steps, and an array of outputs controlling the multiplexers, as well as loading the various steps into the associated registers and into the output register for tracing;
wherein the data path controller is configured to determine, based on its own state and on the value of the inputs into said controller, the value of the outputs that are sent to the multiplexers of the data path in such a way that, in "TRACE" mode, a trace instruction is executed synchronously with the program instruction that has been read simultaneously, said execution being made effective during the final stage of the trace *pipeline.*

In one embodiment of the invention, the processing device detects the insertion of a bubble into the program instruction decoding step, which leads the data path controller to establish a path that in the next cycle loads a "0" as an inoperative trace instruction in the trace instruction decoding step, this trace instruction becoming inoperative in parallel with the bubble entered into the program instruction decoding step.

In one embodiment of the invention, the processing device detects the insertion into the next cycle of a bubble in step 3 of the program instruction pipeline, which leads the data path controller to establish a path that in the next cycle loads a "0" as an inoperative trace instruction into step 3 of the trace instructions, this trace instruction becoming inoperative in parallel with the bubble inserted in step 3 of the program instructions.

In one embodiment of the invention, the processing device detects the insertion into the next cycle of a bubble in step 4 of the program instruction pipeline, which leads the data path controller to establish a path that in the next cycle loads a "0" as an inoperative trace instruction into step 4 of the trace instructions, this trace instruction becoming inoperative in parallel with the bubble inserted in step 4 of the program instructions.

In one embodiment of the invention, the processing device detects the entering into the next cycle of a bubble in step 5 of the program instruction pipeline, which leads the data path controller to establish a path that in the next cycle loads a "0" as an inoperative trace instruction into step 5 of the trace instructions, this trace instruction becoming inoperative in parallel with the bubble inserted in step 5 of the program instructions.

In one embodiment of the invention, the processing device uses a field from an internal control register to determine the configuration of its "TRACE" or "NOMINAL" working mode. In another embodiment of the invention, the processing device uses the value assigned to an external signal of the device to configure the "TRACE" or "NOMINAL" working mode.

A third aspect of the invention discloses a processor comprising a device for the searching, decoding and processing in parallel, and synchronously, of program instructions and trace instructions according to any one of the preceding embodiments for the first aspect of the invention.

In the present device, a shared memory is not used, and the trace mechanism is based on the execution of trace codes stored in words in an auxiliary memory, and not on the execution by the processor itself of an instruction that activates and deactivates the trace. The method of the invention proposed enables the independent control of the trace of each executable code instruction, since the trace codes are inserted into words that are aligned with the executable code instructions from which it is desired to obtain a point trace. The method of the invention proposed defines a three-step procedure, which employs the source code, the object code, and the symbol localization file of a program, to locate the positions of the auxiliary memory words in which to insert the trace information, without altering the executable code. The device proposed in this invention processes the trace information in parallel with the aligned instruction it is intended to trace, which results in the writing, in an output register, of a unique identifying word of the instruction executed. An analysis hardware captures the identification word, so that the specific time at which the instruction traced was executed is recorded. Thus, the present invention does not establish intervals of instructions to be traced, but, by selectively monitoring the trace of instructions located in any part of the code, enables the obtaining of the the worst-case execution time of each of the system functions.

In the invention presented herein, the instructions traced are defined by a method that selectively enables the insertion of the trace information into an auxiliary memory, and in a position aligned to the instruction that we wish to trace. The device presented herein processes the trace information in parallel and synchronously with the instruction it is intended to trace.

The invention defines a method that, on the basis of the source code, the object code, and the symbol localization file of a program, and once the points of the source code to be traced have been selected, determines the content of an auxiliary memory, aligned with the memory that stores the code, so that the instructions to be traced are marked. The invention, therefore, does not modify the array of instructions of the processor and does not require the insertion of trace instructions into the code, so including trace codes does not alter the executable code of the program to be traced. In addition, the invention proposes the configuration of the processing device in two modes, one called TRACE, where the information in the auxiliary memory is interpreted as trace codes that are executed in parallel, and the other, called NOMINAL, which uses the auxiliary memory to contain error detection and correction codes.

Since the application of code instrumentation using current processors introduces an overload at the time of execution, the invention presented, intended to eliminate these overloads, provides an improvement with a specific objective included in this area. The invention prevents the increase in the space occupied by the executable code, since the code is not implemented to mark the instructions to be traced and the need to add new operation codes to the processor.

### BRIEF DESCRIPTION OF THE FIGURES

To complement the description of the invention and for the purpose of aiding the better understanding of the characteristics thereof, a set of drawings is attached as an integral part of said description wherein, by way of illustration and not limitation, the following has been represented:
Figure 1. Method of automatically generating the content of an auxiliary memory, aligned with the program memory, containing the trace codes of those instructions selected to be traced.
Figure 2. Structure of the device for the searching, decoding and parallel execution of program instructions and trace instructions proposed in the invention. In figure 2 the elements of this device are referenced as follows:

- 100: Instruction Search Step 1
- 101: Program memory containing the instructions to be read by the search step
- 102: Auxiliary memory containing the codes to be interpreted by the device
- 103: Search Step Main Module
- 104: Instruction read by the search step main module
- 105: Code read by the search step main module
- 106: Address of the instruction read by the search step main module
- 107: STANDBY: Input to the data path controller that monitors the standby in the search for instructions of the search step main module
- 108: NR_ERROR: Input to the data path controller that monitors the detection of an unrecoverable error in the instruction read by the search step main module
- 109: Module for calculating the address of the instruction to be read in the search step
- 110: Input multiplexer to the register storing the address of the next instruction to be searched for by the search step.
- 111: Register containing the address of the instruction to be searched for by the search step
- 112: LD_DIR: A signal that controls storage in the register containing the address of the next instruction to be searched for by the search step.
- 113: SEL_DIR: Output from the data path controller that monitors the register input multiplexer containing the address of the next instruction to be searched for by the search step.
- 114: Simultaneous decoding step of a program instruction and a trace instruction
- 115: Step 2 program instruction decoding module
- 116: Step 2 trace instruction decoding module
- 117: Program instruction loaded into the step 2 program instruction decoding module
- 118: Trace instruction loaded into the step 2 trace instruction decoding module
- 119: Data path controller of the device
- 120: Data path controller inputs
- 121: Data path controller outputs
- 122: LD_INS: Output of the data path controller controlling the loading of the step 2 program instruction decoding module
- 123: LD_TRZ: Output of the data path controller controlling the loading of the step 2 trace instruction decoding module
- 124: Step 2 trace instruction decoding module input selection multiplexer
- 125: SEL_TE2: Output of the data path controller controlling the step 2 trace instruction decoding module input multiplexer
- 126: Step 3 of the program instruction *pipeline*
- 127: Step 3 of the trace instruction *pipeline*
- 128: Step 4 of the program instruction *pipeline*
- 129: Step 4 of the trace instruction *pipeline*
- 130: Step 5 of the program instruction *pipeline*
- 131: Step 5 of the trace instruction *pipeline*
- 132: Program instruction *pipeline*
- 133: Trace instruction *pipeline*
- 134: Trace information output log
- 135: TE5_DIRI_ES_0: Signal that monitors whether step 5 of the trace instruction *pipeline* stores a zero value in the address field
- 136: LD_TR_OUT: Signal that monitors the storage in the trace information output register. It takes the value complementary to the TE5_DIRI_ES_0 signal, so the register is only loaded when the trace information address field is non-zero.
- 137: Input selection multiplexer for step 3 of the trace Instruction *pipeline*
- 138: Input selection multiplexer for step 4 of the trace Instruction *pipeline*
- 139: Input selection multiplexer for step 5 of the trace Instruction *pipeline*
- 140: SEL_TE3: Output from the data path controller monitoring the multiplexer inputting to step 3 of the trace instruction *pipeline*
- 141: SEL_TE4: Output from the data path controller monitoring the multiplexer inputting to step 4 of the trace instruction *pipeline*
- 142: SEL_TE5: Output from the data path controller monitoring the multiplexer inputting to step 4 of the trace instruction *pipeline*
- 143: BUBBLE_E2: Input signal to the controller monitoring the insertion of a bubble in step 2 of the the program instruction decoding
- 144: BUBBLE_E3: Input signal to the controller monitoring the insertion of a bubble in step 3 of the program instruction *pipeline*
- 145: BUBBLE_E4: Input signal to the controller monitoring the insertion of a bubble in step 4 of the program instruction *pipeline*
- 146: BUBBLE_E5: Input signal to the controller monitoring the insertion of a bubble in step 5 of the program instruction *pipeline*
- 147: Trace information generated by the trace instruction pipeline upon execution of the trace instruction
- 148: Input to the calculation module of the address of the instruction to be read in the search stage corresponds to the jump address
- 149: Address field of the information obtained as a result of the execution of a trace instruction.

### DESCRIPTION OF AN EMBODIMENT OF THE INVENTION

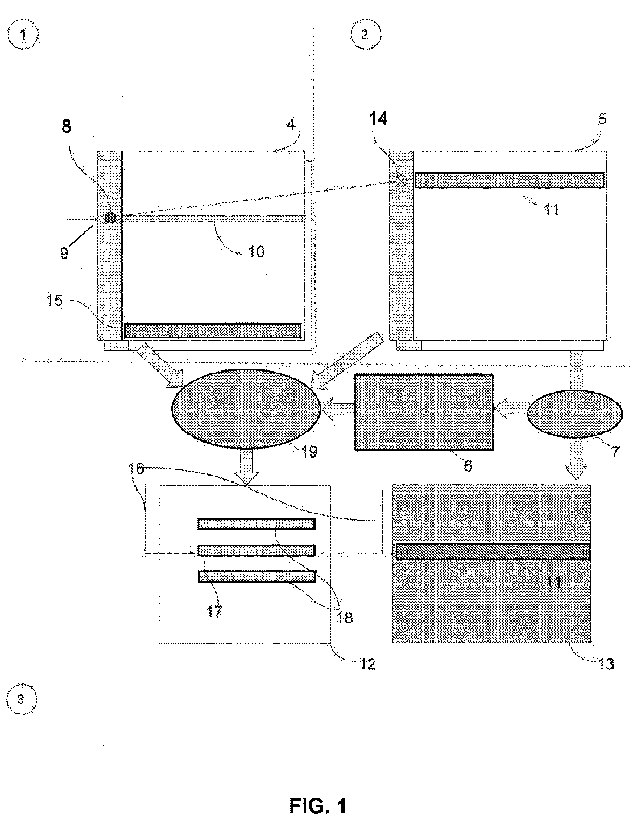

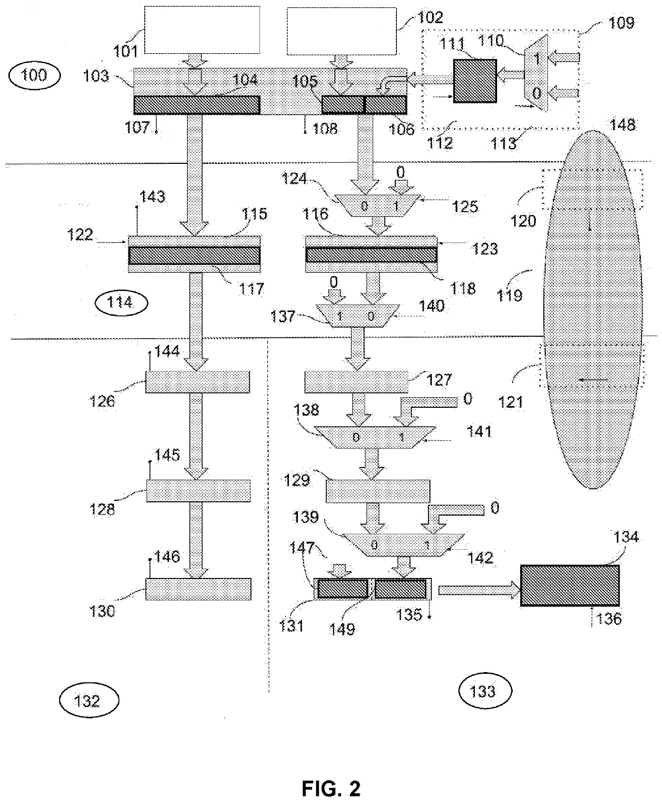

The embodiment of the invention will be based on the implementation of the method described in figure 1, which enables the obtaining of the content of an auxiliary memory, formed by trace codes and no-operation codes, which enables the selective tracing of a program stored in a program memory aligned with the auxiliary memory, as well as the construction of a device, described in figure 2, with two operating modes, called "TRACE" and "NOMINAL", and which in its "TRACE" mode is able to search, decode and execute the trace codes in parallel with the program instructions, without introducing any overload in the execution time of the program, while in "NOMINAL" mode the device is able to interpret each word of the auxiliary memory aligned with an instruction in the program memory, such as a detection and correction code for errors in the storage of that instruction.

The method and the device in its "TRACE" mode can be used to perform a hybrid analysis of programs. This analysis combines the static analysis of the program code with information obtained during the execution of this program on the deployment platform, with the aim of inferring program properties, such as the "worst case execution" time of each of the program functions. The static analysis determines which statements must be traced and, using the selective program instruction tracing method described in the invention, the content of the auxiliary memory containing the trace codes corresponding to the instructions selected for the tracing is obtained.

The selective program instruction tracing method consists of a three-step procedure (1, 2, 3). To execute this procedure, the pre-processed source files (4) of the program, their object files with debugging information (5), and the symbol localisation file (6) obtained during the linking (7) intended to generate the executable file (13) are required. The process makes it possible to obtain the content of an auxiliary memory (12), consisting of trace codes (17) and no-operation codes (18), aligned with the content of the program memory (13) where the instructions to be traced are located.

The first step of the procedure (1) consists of the selection of the statements that will be traced on the pre-processed source files of the program (4), the elements that characterize each statement (10) selected being: the name of the source file (15), the line number (8) of the statement within that file, and the type of trace (9) that it is intended to perform. The procedure enables different types of trace, with the basic type being that which only traces the time of execution of the statement, while the other non-basic types enable the tracing of different elements of the internal state of the processor, such as, for example, the specific content of a register.

The second step of the procedure (2) consists of using the object files with program debugging information (5) to automatically identify, for each statement (10) selected in the first step (1), the relative address (14) of the instruction to be traced (11) that completes the execution of said statement.

The third and final step of the procedure (3) uses, for each statement (10) selected in the first step (1), the elements that characterize said selection, these being: the file name (15), line number (8) and trace type (9). The information provided by these elements, together with the relative address (14), within the object file, of the instruction to be traced (11) identified in the second step (2), is used to perform a search on the symbol localisation file (6), and thus, to be able to automatically obtain the content of an auxiliary memory (12) that locates the trace codes (17) of each statement (10) selected in the first step (1), the displacement (16) of each trace code (17) within the content of the auxiliary memory (12) being the same as that of the instruction to be traced (11), identified in the second step of the procedure (2), within the content of the program memory (13). Those positions of the auxiliary memory that have the same displacement as the instructions that have not been selected for the trace are completed with no-operation (NOP) codes (18), thus obtaining a content of the auxiliary memory (12) that maintains the trace codes (17) of the statements selected for the trace (10) aligned with the instructions to be traced (11) that complete those statements, which are part of the content of the program memory (13).

The device proposed in the invention consists of an internal structure that enables the searching, decoding and execution of program instructions and trace instructions in parallel, so that the trace of the instructions of a program is not intrusive either in the execution time or in the location of the program in the program memory, since it is an auxiliary memory that is used to locate the trace codes. In this way, the storage address, the sequence and the execution time of the program instructions under analysis are not modified by the introduction of the traces.

The main elements of the structure of the device proposed are as follows: a search step (100), which is formed by an instruction address calculation module (109) and a main search step module (103); a decoding step (114), which has a program instruction decoding module (115) and a trace instruction decoding module (116); a *pipeline* for the program instructions (132); a specific *pipeline* for the trace instructions (133); an output register (134), which receives the trace information obtained upon execution of the trace instructions; a data path, formed by an array of multiplexers (110,124,137,138,139); a device data path controller (119) which determines, on the basis of its state and of the value of its inputs (120), the value of the outputs (121) controlled by both the multiplexers (110,124,137,138,139) of the different steps, and the load signals in registers associated with the different steps (111, 115, 116, 126, 127, 128, 129, 130, 131), and also the output register (134). Both the inputs (120) and the outputs (121) are represented graphically in Figure 2, next to the label assigned for each signal.

The processing device uses the search step (100) to simultaneously load a program instruction (104) from the program memory (101) and a code (105) from the auxiliary memory (102), the code being aligned with the instruction; meaning that it has the same displacement within the auxiliary memory (102) as the program instruction (104) within the program memory (101).

The processing device, in its NOMINAL mode, interprets the code (105) within the main module of the search step (103) as an error detection and correction code, such that the program instruction (104) read from the program memory (101) can be corrected in the event of a recoverable error, and it is supplied error-free in the next cycle as a valid program instruction (117) to the program instruction decoder (115) in the decoding step (114). In the event that the error is not recoverable, the main module (103) of the search step (100) will trigger a signal (108) that will be interpreted by the processor as an exception.

The processing device, in its "TRACE" mode, combines the code (105) read from the auxiliary memory (102) with the address (106) corresponding to the program instruction (104) read from the program memory (101), in order to construct a trace instruction (118) which in subsequent cycles is decoded and executed in parallel with the program instruction (117).

In the "TRACE" mode of the processing device, the program instruction decoding module (115), corresponding to the decoding step (114), decodes the program instruction (117) and, in parallel, the trace instruction decoding module (116) decodes the trace instruction (118), the trace code whereof was stored in the auxiliary memory (102) in a position aligned with that of the program instruction (117) in the program memory (101).

In the "TRACE" mode of the processing device, the path controller (119) uses the values of the "STANDBY" (107), "BUBBLE_E2" (143), "BUBBLE_E3" (144), "BUBBLE_E4" (145), "BUBBLE_E5" (146) signals to determine the path to be followed by the trace instructions toward the subsequent steps. The controller configures the multiplexers (124, 137, 138, and 139) of the path to ensure that a trace instruction is executed synchronously with the aligned program instruction, said execution being effective during the final stage (131) of the trace *pipeline* (133), wherein it is verified that the "TE5_DIR_ES_0" (135) signal is deactivated, in which case the "LD_TR_OUT" signal is activated (136) and the trace information is directed toward the output register (134).

The trace information stored in the output register (134) of the device may be analysed by supporting hardware and a logic analyser, such that it is possible to capture the execution time of the program instructions traced, as well as the result of the execution of the trace instruction corresponding to the "TR" field (146) of the trace information. The trace information uniquely identifies the program instruction traced thanks to the DIRI field (149) that was assigned at the search step to the value of the address (106) of the program instruction (104) read.

In the "TRACE" mode of the processing device, the data path controller (119) will monitor the "BUBBLE_E2" signal (143) to detect the insertion of a bubble into the instruction decoding module (115) of the decoding step (114), and will set the "SEL_TE2" signal (125) at the same value as the "BUBBLE_E2" signal (143), such that in the event of insertion of the bubble, the multiplexer (124) inputting to the trace instruction decoding module (116) of the decoding step (114) routes a 0 as input to the trace instruction decoding module (116); and otherwise, what is routed is the trace instruction formed by the code (105) and the address of the instruction to be traced (106), originating from the main module (103) of the previous search step (100).

In the "TRACE" mode of the processing device, the data path controller (119) will monitor the "BUBBLE_E3" signal (144) to detect the insertion of a bubble in step 3 (126) of the instruction pipeline (132), and will set the "SEL_TE3" signal (140) at the same value as the "BUBBLE_E3" signal (144) so that, in the event of the insertion of the bubble, the multiplexer (137) inputting to step 3 (127) of the trace pipeline (133) routes a 0 as input to that step (127); and otherwise, what is routed is the trace instruction (118) from the previous decoding step (116).

In the "TRACE" mode of the processing device, the data path controller (119) will monitor the "BUBBLE_E4" signal (145) to detect the insertion of a bubble in step 4 (128) of the instruction pipeline (132) and will set the "SEL_TE4" signal (141) at the same value as the "BUBBLE_E4" signal (145) so that, in the event of the insertion of the bubble, the multiplexer (138) inputting to step 4 (129) of the trace pipeline (133) routes a 0 as input to that step (129); and otherwise, what is routed to step 4 (129) is the output from the previous step (127).

In the "TRACE" mode of the processing device, the data path controller (119) will monitor the "BUBBLE_E5" signal (146) to detect the insertion of a bubble in step 5 (130) of the instruction pipeline (132) and will set the "SEL_TE5" signal (142) at the same value as the "BUBBLE_E5" signal (146) so that in the event of the insertion of the bubble, the multiplexer (139) inputting to step 5 (131) of the trace pipeline (133) routes a 0 to the DIRI field (149) of that step (131); and otherwise, what is routed to step 5 (131) is the output from the previous step (129).

The processing device, regardless of whether it is configured in "TRACE" mode, or in "NOMINAL" mode, in the event of a jump instruction being made effective in one step of the instruction pipeline (132), will insert a bubble in the next cycle, both in that step and in the previous steps of the instruction pipeline (132), and will set the "SEL_DIR" signal (113) at 0, so that the address calculation module (109) takes the value of the effective jump address located in NEXT_PC (148).

The processing device, regardless of whether it is configured in "TRACE" mode or in "NOMINAL" mode, in the event that its search step (100) detects that the instruction addressed in the program memory (101), whose address is provided by the "DIR" register (111), is not available in a single cycle and one or more standby cycles are required to complete the reading, will activate the "STANDBY" signal for as many cycles as standby cycles are required for the reading; each standby cycle requiring the insertion of a bubble in the decoding step (114).

The preferred physical embodiment will have on the one hand a "Software" part, corresponding to the program that performs the method of obtaining the content of the auxiliary memory described in figure 1, and another "Hardware/Firmware" part, implementing the described functionality of the processing device portrayed in figure 2, based on a model description of a standard processor architecture that uses an auxiliary memory module for the detection and correction of errors on which the aforementioned modifications will be made, which basically affect the possibility of working in two modes; one called "NOMINAL", which interprets the content of the auxiliary memory as error detection and correction codes, and another, called "TRACE" which, by modifying the design of the search and decoding steps, and incorporating the trace pipeline, enables the searching, decoding and execution of the program instructions in parallel with the trace codes stored in the auxiliary memory, calculated by the "Software" that implements the method of obtaining the content of the auxiliary memory described in Figure 1. These model descriptions of architectures will enable the generation of the details of manufacture of the device, which can be realized on a programmable device such as an FPGA (*Field Programmable Gate Array*) or on an *Application Specific Integrated Circuit* (ASIC).

There are different realization options. All of them are based on the VHDL model of an "IP Core" of a segmented processor, such as ARM, LEON or RISC-V, on which the implementation of the *pipeline* structure of the device will be modified to include the functionality described in this patent. The objective is to generate a new "IP Core", which can be manufactured on FPGA or ASIC.

In the "TRACE" type working mode, the search step (100) simultaneously reads a program instruction (104) from the program memory (101) and a code (105) from the auxiliary memory (102), and performs in the main module (103) of the search step (100) the combination of the code (105) read from the auxiliary memory (102) with the address (106) corresponding to the program instruction (104) read from the program memory (101), to construct a trace instruction (118) that in the following cycles is decoded and executed in parallel and in synchrony with the program instruction (117), employing for this purpose a trace instruction *pipeline* (133) that generates, as a result of the execution, a TR value result (147) that will be stored in the last step "TE5" of the trace instruction *pipeline (133);*
where the processing device in its "TRACE" mode employs a trace instruction decoder (116) present in the decoding step (114), which supplies the trace instruction *pipeline* (133);
where, with the processing device in TRACE mode, and in the event that the trace instruction decoder (116) detects a no-operation code "NOP" in the trace instruction (118), the data path controller (119) sets the data path of the trace instruction pipeline (133) so that its "TE3" step (127) receives a 0 and does not load a valid trace instruction, by setting a value of 1 in the "SEL_TE3" signal (140) that controls the multiplexer (137);
where, with the processing device in TRACE mode, the trace instruction pipeline (133) stores in its final "TE5" step (131) the trace information obtained after the execution of a trace instruction (116), this information being formed by the address of the program instruction "DIRI" (149) that is executed in parallel and the data obtained after the execution of the "TR" trace instruction (147). In the event that a valid trace instruction has not been executed in parallel with the program instruction, the value of the "DIRI" field (149) stored in "TE5" (131) will be equal to 0;
where, with the processing device in TRACE mode, the trace instruction *pipeline* (*133*) loads that information into the output register (134), provided that the "DIRI" field (149) stored in "TE5" (131) is not 0, according to the value of the "TE_DIRI_ES_0" signal (135);
where, with the processing device in TRACE mode, and in the event of detecting the activation of the "BUBBLE_E2" signal (143), corresponding to the insertion of a bubble in the program instruction decoding module (115), the data path controller (119) sets the "SEL_TE2" selection signal of the multiplexer (124) inputting to the trace instruction decoding module (116) at 1, and thus, and in parallel with the bubble inserted in the program instruction decoding module (115), a non-operating trace instruction is loaded into the trace instruction decoding module (116);
where, with the processing device in TRACE mode and in the event of detecting the activation of the "BUBBLE_E3" signal (144), corresponding to the insertion of a bubble in step 3, "E3" (126) of the program instruction *pipeline* (132), the data path controller (119) sets the "SEL_TE3" selection signal (140) of the multiplexer (137) inputting to step 3, "TE3" (127) of the trace instruction *pipeline* (133) at 1; and thus, parallel to the bubble inserted in step 3, "E3" (126) of the program instruction *pipeline* (132), a non-operating trace instruction is loaded in step 3, "TE3" (127) of the trace instruction *pipeline (133);*
where, with the processing device in TRACE mode and in the event of detecting the activation of the "BUBBLE_E4" signal (145) corresponding to the insertion of a bubble in step 4, "E4" (128) of the program instruction *pipeline* (132), the data path controller (119) sets the "SEL_TE4" selection signal (141) of the multiplexer (138) inputting to stage 4, "TE4" (129) of the trace instruction *pipeline* (133) at 1; and thus, parallel to the bubble inserted in step 4, "E4" (128) of the program instruction *pipeline* (132), a non-operating trace instruction is loaded in step 4, "TE4" (129) of the trace instruction *pipeline (133);*
where, with the processing device in TRACE mode and in the event of detecting the activation of the "BUBBLE_E5" signal (146) corresponding to the insertion of a bubble in step 5, "E5" (130) of the program instruction *pipeline* (132), the data path controller (119) sets the selection signal "SEL_TE5" (142) of the multiplexer (139) inputting to step 5, "TE5" (131) of the trace instruction *pipeline* (133) at 1; and thus, parallel to the bubble inserted in step 5, "E5" (130) of the program instruction *pipeline* (132), a non-operating trace instruction is loaded in step 5, "TE5" (131) of the trace instruction *pipeline* (*133*)*.*

## Claims

1. A method for the selective tracing of program instructions which, given a program for which pre-processed source files (4), object files with debugging information (5), and a symbol localisation file (6) generated during the linking (7) are provided, comprises the following steps (1, 2, 3):
1. selecting the statements to be traced on the pre-processed source files of the program (4), the elements that characterize each statement being: the name of the source file (15), the line number (8) of the statement within that file, and the type of trace (9); basic if it only traces the time of execution of the statement, or non-basic if it also traces the value of some element of the internal state of the processor, which is intended to be performed;
2. automatically identifying, for each statement (10) selected, the relative address (14) of the instruction to be traced (11) that completes the execution of said statement, using the object files with program debugging information (5);
3. automatically obtaining the content of an auxiliary memory (12), comprising trace codes (17) and no-operation codes (18), using the elements that characterize each statement (10) selected, the relative address (14) identified within the object file of the instruction to be traced that corresponds to the statement (10) selected, and the information from the symbol localisation file (6) obtained during the linking (7) of the object files of the program (5) that generates the executable file (13); in order to obtain, for each statement (10) selected, the trace code (17) and its displacement within the auxiliary memory storing the same, the trace codes (17) being aligned with the instructions to be traced (11) in the content of the program memory (13); where aligned means that the displacement (16) of each trace code (17) within the content of the auxiliary memory (12) is the same as that of the instruction to be traced (11) within the content of the program memory (13), and those positions of the auxiliary memory that have the same displacement as the program instructions that have not been selected for tracing are completed with NOP no-operation codes (18).

2. - A processing device capable of performing parallel searching, decoding and execution of program instructions and trace codes obtained on the basis of the method of claim 1, comprising two working modes called "TRACE" and "NOMINAL", **characterized in that** it comprises:
• a search step (100), which in turn comprises:
o an instruction address calculation module (109),
o a main search module (103), capable of simultaneously reading an instruction (104) in the program memory (101) and a code (105) in an auxiliary memory (102),
• a decoding step (114) which in turn comprises:
o a program instruction decoding module (115),
o a trace instruction decoding module (116),
• a program instruction *pipeline* (132),
• a trace instruction *pipeline* (133),
• an output register (134) that receives the trace information obtained upon execution of a trace instruction,
• a data path comprising an array of multiplexers (110,124,137,138,139),
• a data path controller, having an array of inputs (120), formed by the signals (107, 108, 135, 143, 144, 145, 146) calculated in the different steps, and generating an array of outputs (121), which control the multiplexers (110,124,137,138,139) and the loading in the registers associated with the different steps (111, 115, 126, 127, 128, 129, 130, 131), as well as the loading of the trace information obtained after the execution of a trace instruction in the output register (134),

3. - The processing device as claimed in claim 2, where in the "NOMINAL" type working mode, the search step (100) simultaneously reads a program instruction (104) from the program memory (101) and a code (105) from the auxiliary memory (102), and interprets said code (105) in the main module of the search step (103) as an error detection and correction code; so that the instruction (104) read from the program memory (101) can be corrected, in the event of a recoverable error, and is supplied error-free to the program instruction decoder (115) of the decoding step (114) in a subsequent cycle as a valid program instruction (117) and, in the event that the error is not recoverable, the main module (103) of the search step (100) activates a signal (108) that is interpreted by the processor as an exception.

4. - The processing device as claimed in claim 2, where, in the "TRACE" type working mode, the search step (100) simultaneously reads a program instruction (104) from the program memory (101) and a code (105) from the auxiliary memory (102), and performs in the main module (103) of the search step (100) the combination of the code (105) read from the auxiliary memory (102) with the address (106) corresponding to the program instruction (104) read from the program memory (101), in order to construct a trace instruction (118) that in the following cycles is decoded and executed in parallel and synchronously with the program instruction (117), employing a trace instruction *pipeline* (133) that generates, as a result of the execution, a result value (TR, 147) that will be stored in the final step (TE5) of the trace instruction *pipeline* (133); and employs the trace instruction decoding module (116), present in the decoding step (114), which supplies the trace instruction *pipeline* 133.

5. - The processing device as claimed in claim 4, where the data path controller (119), in the event that the trace instruction decoder (116) detects a no-operation code "NOP" in the trace instruction (118), establishes the data path of the trace instruction pipeline (133) so that its "TE3" step (127) receives a 0 and does not load a valid trace instruction, setting a value of 1 in the "SEL_TE3" signal (140) that controls the multiplexer (137).

6. - The processing device as claimed in claim 5, where the trace instruction *pipeline* (133) stores in its final "TE5" step (131) the trace information obtained after the execution of a trace instruction (116), this information being formed by the address of the program instruction "DIRI" (149), which is executed in parallel, and the data obtained after the execution of the trace instruction "TR" (147); and in the event that a valid trace instruction has not been executed in parallel with the program instruction, the value of the "DIRI" field (149) stored in "TE5" (131) is equal to 0.

7. - The processing device as claimed in claim 6, where the trace instruction *pipeline* (133), loads that information in the output register (134) provided that the "DIRI" field (149) stored in "TE5" (131) is different from 0, in accordance with the value of the "TE_DIRI_ES_0" signal (135).

8. - The processing device as claimed in claim 7, where the data path controller (119), in the event of detecting the activation of the "BUBBLE_E2" signal (143), which corresponds to the insertion of a bubble into the program instruction decoding module (115), sets the "SEL_TE2" selection signal of the multiplexer (124) inputting to the decoding module of the trace instruction (116) at 1, and thus, parallel to the bubble inserted in the program instruction decoding module (115), a non-operating trace instruction is loaded into the trace instruction decoding module (116).

9. - The processing device as claimed in claim 8, where, with the processing device in TRACE mode and in the event of detecting the activation of the "BUBBLE_E3" signal (144), corresponding to the insertion of a bubble in step 3, "E3" (126) of the program instruction *pipeline* (132), the data path controller (119) sets the "SEL_TE3" selection signal (140) of the multiplexer (137) inputting to step 3, "TE3" (127), of the trace instruction *pipeline* (133) at 1; and thus, and parallel to the bubble inserted in step 3, "E3" (126) of the program instruction *pipeline* (132), a non-operating trace instruction is loaded in step 3, "TE3" (127) of the trace instruction *pipeline (133);*

10. - The processing device as claimed in claim 9, where, with the processing device in TRACE mode and in the event of detecting the activation of the "BUBBLE_E4" signal (145) corresponding to the insertion of a bubble in step 4, "E4" (128), of the program instruction *pipeline* (132), the data path controller (119) sets the "SEL_TE4" selection signal (141) of the multiplexer (138) inputting to step 4, "TE4" (129), of the trace instruction *pipeline* (133) at 1; and thus, parallel to the bubble inserted in stage 4, "E4" (128) of the program instruction *pipeline* (132), a non-operating trace instruction is loaded in stage 4, "TE4" (129) of the trace instruction *pipeline* (133);

11. - The processing device as claimed in claim 10, where, with the processing device in TRACE mode and in the event of detecting the activation of the "BUBBLE_E5" signal (146) corresponding to the insertion of a bubble in step 5, "E5" (130) of the program instruction *pipeline* (132), the data path controller (119) sets the "SEL_TE5" selection signal (142) of the multiplexer (139) inputting to step 5, "TE5" (131) of the trace instruction *pipeline* (133) at 1; and thus, parallel to the bubble inserted in step 5, "E5" (130) of the program instruction *pipeline* (132), a non-operating trace instruction is loaded in stage 5, "TE5" (131) of the trace instruction *pipeline* (133).

12. - A processor **characterised in that** the processor comprises a processing device configured to work in two modes, as claimed in any of claims 9 to 11,
where in "NOMINAL" mode it uses an auxiliary memory, whose words are read in parallel with the program instructions and are used as program instruction error detection and correction codes,
where in "TRACE" mode that same auxiliary memory is used to store codes that enable the tracing of the program instructions, and that are read and executed in parallel with the program instructions, as claimed in any of the preceding claims.

## Patentansprüche

1. Verfahren zur selektiven Verfolgung der Programmbefehle, das, bei einem Programm, für das vorverarbeitete Quelldateien (4), Objektdateien mit Debugging-Informationen (5) und eine während der Verknüpfung (7) erzeugte Symbol-Lokalisierungsdatei (6) bereitgestellt werden, die folgenden Schritte (1, 2, 3) umfasst:
1. Auswählen der Anweisungen, die auf den vorverarbeiteten Quelldateien des Programms (4) verfolgt werden sollen, dabei sind die Elemente, die jede Anweisung charakterisieren: Der Name der Quelldatei (15), die Zeilennummer (8) der Anweisung in dieser Datei und der Typ der Ablaufverfolgung (9); basic, wenn nur der Zeitpunkt der Ausführung der Anweisung verfolgt wird, oder non-basic, wenn auch der Wert eines Elements des internen Zustands des Prozessors verfolgt wird, der ausgeführt werden soll;
2. Automatisches Identifizieren, für jede ausgewählte Anweisung (10), der relativen Adresse (14) der zu verfolgende Anweisung (11), die die Ausführung der Anweisung abschließt, unter Verwendung der Objektdateien mit Programm-Debugging-Informationen (5);
3. Automatisches Beziehen des Inhalts eines Hilfsspeichers (12), der Trace-Codes (17) und No-Operation-Codes (18) umfasst, unter Verwendung der Elemente, die jede ausgewählte Anweisung (10) charakterisieren, der relativen Adresse (14), die in der Objektdatei des zu verfolgenden Befehls identifiziert wird, die der ausgewählten Anweisung (10) entspricht, und der Informationen aus der Symbol-Lokalisierungsdatei (6), die während der Verknüpfung (7) der Objektdateien des Programms (5) erhalten werden, das die ausführbare Datei (13) erzeugt; um für jede ausgewählte Anweisung (10), den Trace-Code (17) und seine Verschiebung innerhalb des Hilfsspeichers, der ihn speichert, zu erhalten, wobei die Trace-Codes (17) mit den zu verfolgenden Befehlen (11) im Inhalt des Programmspeichers (13) ausgerichtet sind; wobei "ausgerichtet" bedeutet, dass die Verschiebung (16) jedes Trace-Codes (17) innerhalb des Inhalts des Hilfsspeichers (12) die gleiche ist wie die des zu verfolgenden Befehls (11) innerhalb des Inhalts des Programmspeichers (13), und solche Positionen des Hilfsspeichers, die die dieselbe Verschiebung wie die Programmbefehle haben, die nicht für die Verfolgung ausgewählt wurden, werden mit NOP No-Operation-Codes (18) abgeschlossen.

2. Verarbeitungsvorrichtung, die in der Lage ist, parallel Programmbefehle und Trace-Codes, die auf der Grundlage des Verfahrens nach Anspruch 1 erhalten wurden, zu suchen, zu dekodieren und auszuführen, umfassend zwei F-Arbeitsmodi, die als "TRACE" und "NOMINAL" bezeichnet werden, die **dadurch gekennzeichnet, dass** sie Folgendes umfassen:
• einen Suchschritt (100), der wiederum umfasst:
o ein Befehlsadressen-Berechnungsmodul (109),
o ein Hauptsuchmodul (103), das in der Lage ist, gleichzeitig eine Anweisung (104) in dem Programmspeicher (101) und einen Code (105) in einem Hilfsspeicher (102) zu lesen,
• einen Dekodierschritt (114), der wiederum umfasst:
o ein Programmbefehls-Dekodierungsmodul (115),
o ein Trace-Befehls-Dekodierungsmodul (116),
• eine Programmbefehls-Pipeline (132),
• eine Trace-Befehls-Pipeline (133),
• ein Ausgaberegister (134) das die bei Ausführung einer Trace-Anweisung erhaltenen Trace-Informationen empfängt,
• einen Datenpfad, der ein Array von Multiplexern (110, 124, 137, 138, 139) umfasst,
• eine Datenpfadsteuerung mit einem Array von Eingängen (120), die durch die in den verschiedenen Schritten berechneten Signale (107, 108, 135, 143, 144, 145, 146) gebildet werden und ein Array von Ausgängen (121) erzeugen, die die Multiplexer (110, 124, 137, 138, 139) und das Laden in die Register, die den verschiedenen Schritten (111, 115, 126, 127, 128, 129, 130, 131) zugeordnet sind, sowie das Laden der nach der Ausführung eines Trace-Befehls im Ausgaberegister (134) erhaltenen Trace-Informationen steuern,

3. Verarbeitungsvorrichtung nach Anspruch 2, wobei in dem "NOMINAL" Arbeitsmodus der Suchschritt (100) gleichzeitig einen Programmbefehl (104) aus dem Programmspeicher (101) und einen Code (105) aus dem Hilfsspeicher (102) ausliest und diesen Code (105) im Hauptmodul des Suchschritts (103) als einen Fehlererkennungs- und Fehlerkorrekturcode interpretiert, so dass den aus dem Programmspeicher (101) gelesenen Befehl (104) im Falle eines behebbaren Fehlers korrigiert werden kann und in einem nachfolgenden Zyklus fehlerfrei dem Programmbefehls-Dekodierer (115) des Dekodierungsschritts (114) als ein gültigen Programmbefehl (117) zugeführt wird und für den Fall, dass der Fehler nicht behebbar ist, das Hauptmodul (103) des Suchschritts (100) ein Signal (108) aktiviert, das von dem Prozessor als eine Ausnahme interpretiert wird.

4. Verarbeitungsvorrichtung nach Anspruch 2, wobei der Suchschritt (100) im "TRACE"-Arbeitsmodus gleichzeitig einen Programmbefehl (104) aus dem Programmspeicher (101) und einen Code (105) aus dem Hilfsspeicher (102) liest und im Hauptmodul (103) des Suchschritts (100) die Kombination des aus dem Hilfsspeicher (102) gelesenen Codes (105) mit der Adresse (106), die den aus dem Programmspeicher (101) gelesenen Programmbefehl (104) entspricht, durchführt, um einen Trace-Befehl (118) zu konstruieren, die in den folgenden Zyklen parallel und synchron mit dem Programmbefehl (117) dekodiert und ausgeführt wird, wobei eine Trace-Befehls-Pipeline (133) verwendet wird, die als Ergebnis der Ausführung einen Ergebniswert (TR, 147) erzeugt, der im letzten Schritt (TE5) der Trace-Befehls-Pipeline (133) gespeichert wird; und das Trace-Befehls-Dekodierungsmodul (116) verwendet wird, das im Dekodierungsschritt (114) vorhanden ist, der die Trace-Befehls-Pipeline (133 ) versorgt.

5. Verarbeitungsvorrichtung nach Anspruch 4, wobei die Datenpfadsteuerung (119) für den Fall, dass der Trace-Befehls-Dekodierer (116) einen No-Operation-Code "NOP" in der Trace-Anweisung (118) erkennt, den Datenpfad der Trace-Befehls-Pipeline (133) so einrichtet, dass sein "TE3"-Schritt (127) eine 0 empfängt und keinen gültigen Trace-Befehl lädt, wobei ein Wert 1 in dem "SEL_TE3"-Signal (140) eingestellt wird, das den Multiplexer (137) steuert.

6. Verarbeitungsvorrichtung nach Anspruch 5, wobei die Trace-Befehls-Pipeline (133) in ihrem letzten "TE5"-Schritt (131) die nach der Ausführung eines Trace-Befehls (116) erhaltenen Trace-Informationen speichert, wobei diese Informationen durch die Adresse des parallel ausgeführten Programmbefehls "DIRI" (149) und die nach der Ausführung des Trace-Befehls "TR" (147) erhaltenen Daten gebildet werden; und für den Fall, dass einen gültigen Trace-Befehl nicht parallel zum Programmbefehl ausgeführt wurde, ist der Wert des in "TE5" (131) gespeicherten "DIRI" -Felds (149) gleich 0.

7. Verarbeitungsvorrichtung nach Anspruch 6, wobei die Trace-Befehls-Pipeline (133) diese Informationen in das Ausgaberegister (134) lädt, vorausgesetzt, dass das in "TE5" (131) gespeicherte "DIRI"-Feld (149) gemäß dem Wert des "TE_DIRI_ES_0"-Signals (135) von 0 verschieden ist.

8. Verarbeitungsvorrichtung nach Anspruch 7, wobei die Datenpfadsteuerung (119) für den Fall, dass die Aktivierung des "BUBBLE_E2"-Signals (143) erfasst wird, das dem Einfügen einer Blase in das Programmbefehls-Dekodierungsmodul (115) entspricht, das das "SEL_TE2"-Auswahlsignal des Multiplexers (124), der Eingaben in das Dekodierungsmodul dem Trace-Befehl (116) macht, auf 1 setzt, und somit parallel zu der Blase, die in das Programmbefehls-Dekodierungsmodul (115) eingefügt ist, eine Non-operating Trace-Anweisung in das Trace-Befehls-Dekodierungsmodul (116) geladen wird.

9. Verarbeitungsvorrichtung nach Anspruch 8, wobei, wenn sich die Verarbeitungsvorrichtung im TRACE-Modus befindet und für den Fall, dass die Aktivierung des "BUBBLE_E3"-Signals (144) erfasst wird, das dem Einfügen einer Blase in Schritt 3 "E3" (126) der Programmbefehls-Pipeline (132) entspricht, die Datenpfadsteuerung (119) das "SEL_TE3"-Auswahlsignal (140) des Multiplexers (137), der Eingaben in Schritt 3 "TE3" (127) der Trace-Befehls-Pipeline (133) macht, auf 1 setzt; und somit parallel zu der in Schritt 3 "E3" (126) der Programmbefehls-Pipeline (132) eingefügten Blase in Schritt 3 "TE3" (127) der Trace-Befehls-Pipeline (133) einen Non-operating Trace-Befehl geladen wird;

10. Verarbeitungsvorrichtung nach Anspruch 9, wobei, wenn sich die Verarbeitungsvorrichtung im TRACE-Modus befindet und für den Fall, dass die Aktivierung des "BUBBLE_E4"-Signals (145) erfasst wird, das dem Einfügen einer Blase in Schritt 4 "E4" (128) der Programmbefehls-Pipeline (132) entspricht, die Datenpfadsteuerung (119) das "SEL_TE4"-Auswahlsignal (141) des Multiplexers (138), der in Schritt 4 "TE4" (129) Eingaben in die Trace-Befehls-Pipeline (133) macht, auf 1 setzt; und somit parallel zu der in Schritt 4 "E4" (128) der Programmbefehls-Pipeline (132) eingefügten Blase in Schritt 4 "TE4" (129) der Trace-Anweisungs-Pipeline (133) einen Non-operating Trace-Befehl geladen wird;

11. Verarbeitungsvorrichtung nach Anspruch 10, wobei, wenn sich die Verarbeitungsvorrichtung im TRACE-Modus befindet und für den Fall, dass die Aktivierung des "BUBBLE_E5"-Signals (146) erfasst wird, das dem Einfügen einer Blase in Schritt 5 "E5" (130) der Programmanweisungs-Pipeline (132) entspricht, die Datenpfadsteuerung (119) das "SEL_TE5"-Auswahlsignal (142) des Multiplexers (139), der in Schritt 5 "TE5" (131) Eingaben in die Trace-Befehls-Pipeline (133) macht, auf 1 setzt; und somit parallel zu der in Schritt 5 "E5" (130) der Programmbefehls-Pipeline (132) eingefügten Blase in Schritt 5 "TE5" (131) der Trace-Befehls-Pipeline (133) einen Non-operating Trace-Befehl geladen wird;

12. Prozessor, **dadurch gekennzeichnet, dass** der Prozessor eine Verarbeitungsvorrichtung umfasst, die konfiguriert ist, in zwei Modi zu arbeiten, wie in einem der Ansprüche 9 bis 11 beansprucht,
wobei er im Modus "NOMINAL" einen Hilfsspeicher verwendet, dessen Wörter parallel zu den Programmbefehle gelesen werden und als Programmbefehls-Fehlererkennungs- und Fehlerkorrekturcodes verwendet werden,
wobei im "TRACE"-Modus derselbe Hilfsspeicher verwendet wird, um Codes zu speichern, die die Verfolgung der Programmbefehle ermöglichen und die parallel zu den Programmanweisungen gelesen und ausgeführt werden, wie in einem der vorstehenden Ansprüche beansprucht.

## Revendications

1. Procédé pour le traçage sélectif d'instructions de programme qui, compte tenu d'un programme pour lequel des fichiers sources prétraités (4), des fichiers objets avec des informations de débogage (5) et un fichier de localisation de symboles (6) créés pendant la liaison (7) sont fournis, comprend les étapes suivantes (1, 2, 3) :
1. sélectionner les instructions à tracer sur les fichiers sources prétraités du programme (4), les éléments qui caractérisent chaque instruction étant : le nom du fichier source (15), le numéro de ligne (8) de l'instruction dans ce fichier et le type de trace (9) : basique si elle ne trace que l'heure d'exécution de l'instruction, ou non basique si elle trace également la valeur d'un élément de l'état interne du processeur, qui est destiné à être effectué ;
2. identifier automatiquement, pour chaque instruction (10) sélectionnée, l'adresse relative (14) de l'instruction à tracer (11) qui termine l'exécution de ladite instruction, en utilisant les fichiers objets avec des informations de débogage de programme (5) ;
3. obtenir automatiquement le contenu d'une mémoire auxiliaire (12), comprenant des codes de trace (17) et des codes de non-opération (18), en utilisant les éléments qui caractérisent chaque instruction (10) sélectionnée, l'adresse relative (14) identifiée dans le fichier objet de l'instruction à tracer qui correspond à l'instruction (10) sélectionnée, et les informations du fichier de localisation de symbole (6) obtenues lors de la liaison (7) des fichiers objets du programme (5) qui produit le fichier exécutable (13), afin d'obtenir, pour chaque instruction (10) sélectionné, le code de trace (17) et son déplacement dans la mémoire auxiliaire le stockant, les codes de trace (17) étant alignés avec les instructions à tracer (11) dans le contenu de la mémoire de programme (13), où « aligné » signifie que le déplacement (16) de chaque code de trace (17) dans le contenu de la mémoire auxiliaire (12) est le même que celui de l'instruction à tracer (11) dans le contenu de la mémoire de programme (13), et les positions de la mémoire auxiliaire qui ont le même déplacement que les instructions du programme qui n'ont pas été sélectionnées pour le traçage sont complétées par des codes de non-opération NOP (18).

2. Dispositif de traitement capable d'effectuer une recherche, un décodage et l'exécution d'instructions de programme et de codes de trace obtenus sur la base du procédé de la revendication 1, comprenant deux modes de travail F appelés « TRACE » et « NOMINAL », **caractérisés en ce qu'**ils comprennent :
• une étape de recherche (100), qui comprend à son tour :
o un module de calcul d'adresse d'instruction (109),
o un module de recherche principal (103), capable de lire simultanément une instruction (104) dans la mémoire de programme (101) et un code (105) dans une mémoire auxiliaire (102),
• une étape de décodage (114) qui comprend à son tour :
o un module de décodage d'instructions de programme (115),
o un module de décodage d'instructions de suivi (116),
• un *pipeline* d'instructions de programme (132),
• un *pipeline* d'instructions de suivi (133),
• un registre de sortie (134) qui reçoit les informations de trace obtenues lors de l'exécution d'une instruction de trace,
• un chemin de données comprenant un réseau de multiplexeurs (110, 124, 137, 138, 139),
• un contrôleur de chemin de données, ayant un réseau d'entrées (120), formé par les signaux (107, 108, 135, 143, 144, 145, 146) calculés aux différentes étapes, et créant un réseau de sorties (121), qui contrôlent les multiplexeurs (110, 124, 137, 138, 139) et le chargement dans les registres associés aux différentes étapes (111, 115, 126, 127, 128, 129, 130, 131), ainsi que le chargement des informations de trace obtenues après l'exécution d'une instruction de trace dans le registre de sortie (134),

3. Dispositif de traitement selon la revendication 2, dans lequel, dans le fonctionnement de type « NOMINAL », l'étape de recherche (100) lit simultanément une instruction de programme (104) dans la mémoire de programme (101) et un code (105) dans la mémoire auxiliaire (102), et interprète ledit code (105) dans le module principal de l'étape de recherche (103) comme un code de détection et de correction d'erreur, de sorte que l'instruction (104) lue dans la mémoire de programme (101) peut être corrigée, en cas d'erreur récupérable, et est fournie sans erreur au décodeur d'instruction de programme (115) de l'étape de décodage (114) dans un cycle suivant comme une instruction de programme valide (117) et, dans le cas où l'erreur n'est pas récupérable, le module principal (103) de l'étape de recherche (100) active un signal (108) qui est interprété par le processeur comme une exception.

4. Dispositif de traitement selon la revendication 2, dans lequel, dans le mode de travail de type « TRACE », l'étape de recherche (100) lit simultanément une instruction de programme (104) dans la mémoire de programme (101) et un code (105) dans la mémoire auxiliaire (102), et exécute dans le module principal (103) de l'étape de recherche (100) la combinaison du code (105) lu dans la mémoire auxiliaire (102) avec l'adresse (106) correspondant à l'instruction de programme (104) lue dans la mémoire de programme (101), afin de construire une instruction de trace (118) qui, dans les cycles suivants, est décodée et exécutée en parallèle et de manière synchrone avec l'instruction de programme (117), en utilisant un *pipeline* d'instructions de trace (133) qui crée, à la suite de l'exécution, une valeur de résultat (TR, 147) qui sera stockée dans la dernière étape (TE5) du *pipeline* d'instructions de trace (133), et utilise le module de décodage d'instructions de trace (116), présent dans l'étape de décodage (114), qui fournit le *pipeline* d'instructions de trace (133).

5. Dispositif de traitement selon la revendication 4, dans lequel le contrôleur de chemin de données (119), dans le cas où le décodeur d'instructions de suivi (116) détecte un code de non-opération « NOP » dans l'instruction de suivi (118), établit le chemin de données du pipeline d'instructions de suivi (133), de manière à ce que son étape « TE3 » (127) reçoive un 0 et ne charge pas une instruction de suivi valide, définissant une valeur de 1 dans le signal « SEL_TE3 » (140) qui commande le multiplexeur (137).

6. Dispositif de traitement selon la revendication 5, dans lequel le *pipeline* d'instructions de traçage (133) stocke dans son étape finale « TE5 » (131) les informations de trace obtenues après l'exécution d'une instruction de trace (116), ces informations étant formées par l'adresse de l'instruction de programme « DIRI » (149), qui est exécutée en parallèle, et les données obtenues après l'exécution de l'instruction de trace « TR » (147), et dans le cas où une instruction de trace valide n'a pas été exécutée en parallèle avec l'instruction de programme, la valeur du champ « DIRI » (149) stockée dans « TE5 » (131) est égale à 0.

7. Dispositif de traitement selon la revendication 6, dans lequel le *pipeline* d'instructions de traçage (133), charge ces informations dans le registre de sortie (134) à condition que le champ « DIRI » (149) stocké dans « TE5 » (131) soit différent de 0, conformément à la valeur du signal « TE_DIRI_ES_0 » (135).

8. Dispositif de traitement selon la revendication 7, dans lequel le contrôleur de chemin de données (119), dans l'événement de détection de l'activation du signal « BUBBLE_E2 » (143), qui correspond à l'insertion d'une bulle dans le module de décodage d'instruction de programme (115), met à 1 le signal de sélection « SEL_TE2 » du multiplexeur (124) entrant dans le module de décodage de l'instruction de trace (116), et ainsi, parallèlement à la bulle insérée dans le module de décodage d'instruction de programme (115), une instruction de trace non opérationnelle est chargée dans le module de décodage d'instruction de trace (116).

9. Dispositif de traitement selon la revendication 8, dans lequel, le dispositif de traitement étant en mode TRACE et en cas de détection de l'activation du signal « BUBBLE_E3 » (144) , correspondant à l'insertion d'une bulle à l'étape 3, « E3 (126) du *pipeline* d'instructions de programme (132), le contrôleur de chemin de données (119) définit le signal de sélection « SEL_TE3 » (140) du multiplexeur (137) entrant à l'étape 3, « TE3 » (127), du *pipeline* d'instructions de trace (133) à 1 ; et ainsi, parallèlement à la bulle insérée à l'étape 3, « E3 » (126) du *pipeline* d'instructions de programme (132), une instruction de trace non opérationnelle est chargée à l'étape 3, « TE3 » (127) du *pipeline* d'instructions de trace (133).

10. Dispositif de traitement selon la revendication 9, dans lequel, le dispositif de traitement étant en mode TRACE et en cas de détection de l'activation du signal « BULLE_E4 » (145) correspondant à l'insertion d'une bulle à l'étape 4, « E4 » (128), du *pipeline* d'instructions de programme (132), le contrôleur de chemin de données (119) définit le signal de sélection « SEL_TE4 » (141) du multiplexeur (138) entrant à l'étape 4, « TE4 » (129), du *pipeline* d'instructions de trace (133) à 1 ; et ainsi, parallèlement à la bulle insérée à l'étape 4, « E4 » (128) du *pipeline* d'instructions de programme (132), une instruction de trace non opérationnelle est chargée à l'étape 4, « TE4 » (129) du *pipeline* d'instructions de trace (133) ;

11. Dispositif de traitement selon la revendication 10, dans lequel, avec le dispositif de traitement en mode TRACE et en cas de détection de l'activation du signal « BULLE_E5 » (146) correspondant à l'insertion d'une bulle à l'étape 5, « E5 » (130) du *pipeline* d'instructions de programme (132), le contrôleur de chemin de données (119) définit le signal de sélection « SEL_TE5 » (142) du multiplexeur (139) entrant à l'étape 5, « TE5 » (131) du *pipeline* d'instructions de trace (133) à 1, et ainsi, parallèlement à la bulle insérée à l'étape 5, « E5 » (130) du *pipeline* d'instructions de programme (132), une instruction de trace non opérationnelle est chargée à l'étape 5, « TE5 » (131) du *pipeline* d'instructions de trace (133).

12. Processeur **caractérisé par le fait que** le processeur comprend un dispositif de traitement configuré pour fonctionner selon deux modes, selon l'une quelconque des revendications 9 à 11,
où, en mode « NOMINAL », il utilise une mémoire auxiliaire, dont les mots sont lus en parallèle avec les instructions du programme et sont utilisés comme codes de détection et de correction d'erreurs d'instructions du programme,
où, en mode « TRACE », cette même mémoire auxiliaire est utilisée pour stocker des codes qui permettent le traçage des instructions de programme, et qui sont lus et exécutés en parallèle avec les instructions de programme, comme revendiqué dans l'une quelconque des revendications précédentes.
